# EUROPEAN PATENT SPECIFICATION

(11) **EP 3 267 666 B1**
(45) Date of publication and mention of the grant of the patent: **03.03.2021**
(21) Application number: 16178637.1
(22) Date of filing: 08.07.2016
(51) Int. Cl.: H04M 1/60, H04R 1/10, H04R 5/033

(54) **A WIRELESS EARPHONE SYSTEM COMPRISING A FIRST EARPHONE AND A SECOND EARPHONE**
DRAHTLOSES KOPFHÖRER-SYSTEM MIT EINEM ERSTEN KOPFHÖRER UND EINEM ZWEITEN KOPFHÖRER
SYSTÈME DE CASQUE SANS FIL AVEC UN PREMIER CASQUE ET UN SECOND CASQUE

(43) Date of publication of application: 10.01.2018
(73) Proprietor: GN Audio A/S, 2750 Ballerup (DK)
(72) Inventor: JENSEN, Kell Michael, DK-2750 Ballerup (DK); BILLE, Holger, DK-2750 Ballerup (DK)
(74) Representative: Zacco Denmark A/S

(56) References cited:
- EP-A1- 1 670 283
- EP-A1- 1 887 832
- WO-A1-2008/113053
- WO-A1-2016/063143
- US-A1- 2007 037 615
- US-A1- 2007 149 261
- US-A1- 2009 154 739

## Description

### Technical Field

The invention relates to a wireless earphone system comprising a first earphone and a second earphone, wherein the first earphone comprises a first earphone transceiver of a first type and a second earphone transceiver of a second type, and the second earphone comprises a third earphone transceiver of the first type, whereby a first wireless link can be established between the first earphone transceiver and the third earphone transceiver, and wherein a second wireless link can be established between the second earphone transceiver and an audio rendering transceiver of the second type of an audio rendering device.

### Background Art

A wireless earphone system according to the prior art is known from US 7,627,289. Such a system is also called a "true wireless headphones" system as it can be used without any wires or cables between the two earphones and between the earphones and the audio rendering device, which is typically a smart phone. This is a great advantage, as no cables will be tangled with clothing, hair, ears etc. during use. However, a disadvantage with such a system is, that the earphones are easier lost, especially if they are embodied as small earbuds to be inserted into the ears. There exist several apps, which can be used to localise a lost "normal" Bluetooth® headset. For example, the Jabra® Assist app has a feature called "Find my Jabra®". Every time the headset is used, its position is geo-tagged. This means that if it is misplaced it can be located on a map of the smartphone. The app saves the geographic position every time the Bluetooth® link between the smart phone and the headset is broken. The break of connection can be intentional or unintentional. For example, if the user leaves his home with his smartphone in his pocket while a Bluetooth® connected headset is lying on the kitchen table, the Bluetooth® connection will break, and at the same time the Jabra® Assist app will save position and time for the smartphone. Thus, when the user later the same day will try to find his headset, the app can tell him that last time it was connected to the phone, was in the morning at his home. Then the user may start looking for the headset at his home.

A true wireless system according to the prior art is more complex, as it comprises two wireless earphones, where only the first earphone is wirelessly connected to the audio rendering device. The second earphone may easily be lost, as the audio rendering device is not aware of whether the second earphone is connected to the first earphone or not.

A wireless earphone system according to the preamble of claim 1 is known from WO 2016/063143.

### Disclosure of Invention

The wireless earphone system according to the present invention is defined in claim 1. Preferred aspects of the present invention are defined in the dependent claims.

### Brief Description of the Drawings

The invention is explained in detail below with reference to the drawing illustrating a preferred embodiment of the invention and in which
Fig. 1 is a simplified view of a wireless earphone system according to the invention during use,
Fig. 2 is a schematic view of a wireless earphone system according to the invention,
Fig. 3 is a diagram showing different steps of actions carried out by the wireless earphone system according to the invention.

### Modes for Carrying out the Invention

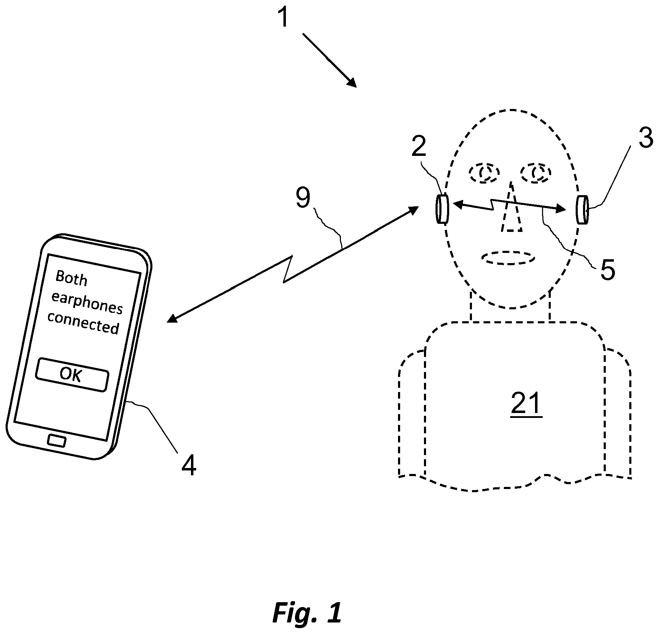

Figure 1 shows a wireless earphone system comprising two wireless earphones. A first wireless earphone 2 is attached to the right ear of a user 21 and a second earphone 3 is attached to the left ear of the user 21. Each of the right earphone 2 and the left earphone 3 comprises a magnetic induction transceiver, whereby a magnetic induction link 5 can be established there between. The right earphone 2 also comprises a Bluetooth® transceiver, whereby a wireless Bluetooth® link 9 can be established between the first earphone 2 and a Bluetooth® enabled smart phone 4.

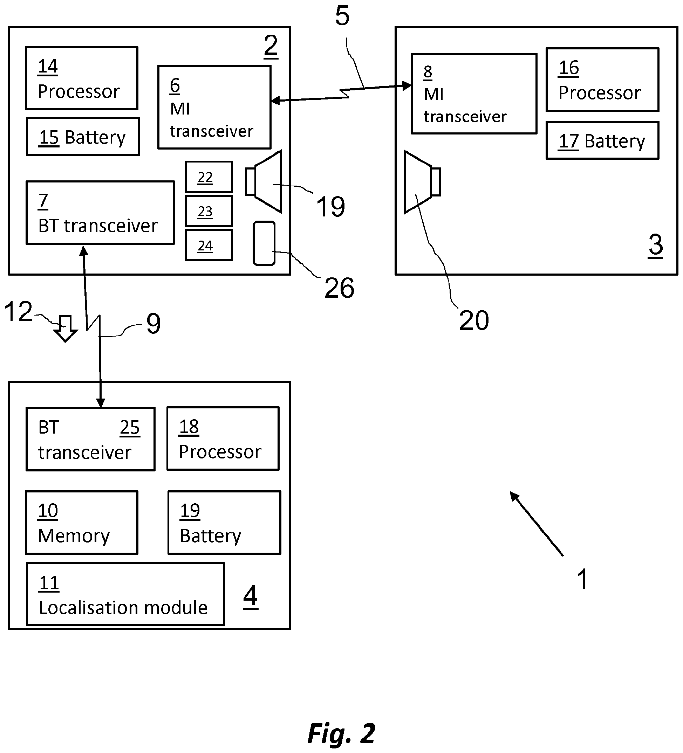

Figure 2 shows a schematic diagram of the wireless earphone system 1 with the most essential parts. Other parts necessary for making the system work are left out for clarity reasons. The right (first) earphone 2 comprises an MI (magnetic induction) transceiver 6, a speaker 19, a microphone 26, a processor 14, a rechargeable battery 15 and a BT (Bluetooth) transceiver 7. The second (left) earphone 3 comprises an MI transceiver 8, a speaker 20, a processor 16 and a rechargeable battery 17. The MI transceivers 6, 8 provides two way data exchange, so that they can exchange info about how to transfer audio from the first earphone 2 to the second earphone 3. This data exchange also informs the first earphone 2 whether there MI link 5 is established or not.

The smart phone 4 comprises a BT transceiver 25, a processor 18, a memory module 10, a rechargeable battery 19 and a localisation module 11. The localisation module 11 is able to determine the current geographical position of the smartphone by making use of an internal GPS sensor and/or Cell ID or Wi-Fi positioning. This is well known and will not be explained here.

The wireless earphone system 1 is a so-called true wireless system. No cables are needed between the earphones 2, 3 and the smart phone 4. Therefore, both the earphones 2, 3 comprise an internal rechargeable battery 15, 17. When listening to music rendered by the smart phone 4, the stereo music signal comprising a right audio signal and a left audio signal is transferred via the BT link 9 to the BT transceiver 7 in the right earphone 2. The processor 14 in the right earphone 2 processes the stereo audio signal and sends the right audio signal to the speaker 19 and the left signal to the MI transmitter 6. The left signal is transferred via the MI link 5 to the MI transceiver 8 in the left earphone 3, where it is processed by the processor 16 and forwarded to the speaker 20.

The wireless earphone system 1 is flexible. It can be used with the right earphone 2 only or with both earphones 2, 3. Typically, a user may prefer to only use the right earphone 2 comprising the microphone 26, while having a telephone conversation over the smart phone 4. When listening to music, the user may prefer listening to stereo using both earphones 2, 3.

When both earphones 2, 3 are switched on and within range of each other, the MI link 5 is established. This MI link 5 enables information to be sent both ways, whereby the right earphone processor 14 "knows", that the left earphone 3 is connected and that the audio stereo signal should be separated into a right signal and a left signal. If the left earphone 3 is not connected, the right earphone processor 14 will not split the stereo signal and send left and right audio to the speaker 19.

Regardless whether the left earphone 3 is connected to the right earphone 2 or not, the smartphone 4 only "sees" the right earphone 2. An app on the smartphone 4 makes use of the localisation module to determine the geographic position at the time when the Bluetooth® 9 link with the right earphone 2 is broken, either intentional by f.ex. switching off the right earphone, or unintentional, if the distance between the smart phone 4 and the right earphone 2 becomes too large. The smart phone app knows when the Bluetooth® link 9 is broken and time stamps the geo-position, whereby the location of the right earphone 2 can be determined, unless the right earphone 2 has been moved afterwards.

The localisation of the left earbud works different. When the MI Link 5 is broken, the right earphone processor 14, sends a lost link signal 12 via the BT link 9 to the smart phone 4. The smart phone app geotags its position, when it receives the link lost signal from the right earphone 2, whereby it can assist in locating the left earphone 3.

The right earphone 2 may also be provided with a memory module and a time modlule, whereby it can save information about, when it was last connected to the left earphone 3. The right earphone 2 may additionally be provided with a localisation module, whereby it also can save info about where it was last connected with the left earphone 3. This localisation module may use internal localisation sensors, such as a built-in GPS module, or localisation data received from external sources, f. ex. the connected smart phone 4.

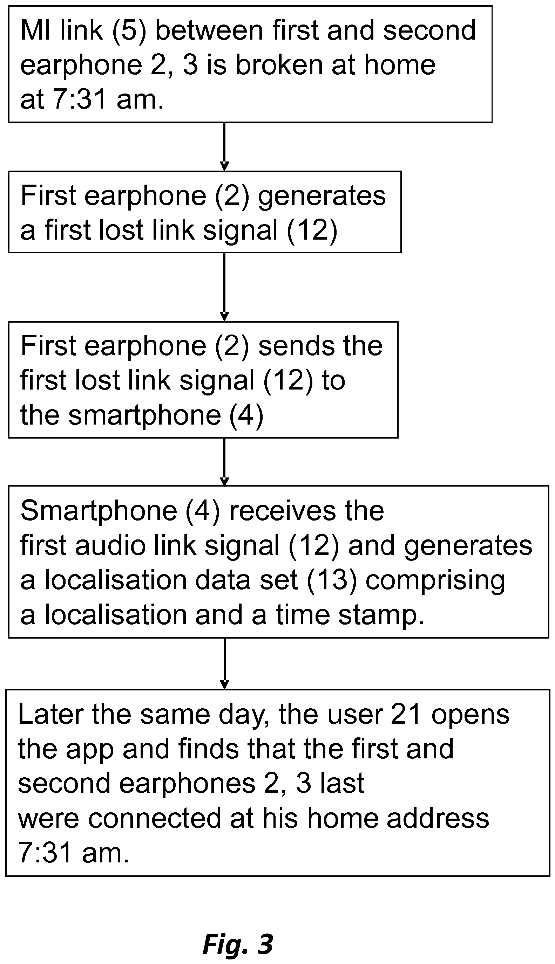

Fig. 3 is a diagram showing different steps of actions carried out by the wireless earphone system according to the invention. The user 21 is eating breakfast at home while listening to music via his truly wireless earphone system. When finished eating, he pulls the left earphone 3 out of the ear and leaves it on the table. The MI link 5 between the two earphones 2, 3 is broken , the first earphone 2 generates a lost link signal 12, which is sent via the BT link 9 to the smart phone 4. The app on the smart phone 4 receives the lost link signal, and saves the current time and location, which is determined by the phone's built-in GPS module. The user 21 uses the first earphone 2 as a mono headset for telephone conversations during his workday. In the afternoon, the user 21 drives to the gym where he wants to exercise while listening to music. He cannot find the second earphone 3 in his pockets and checks the app on his smart phone 4. He realises, that the second earphone 3 probably is lying at his home, as it most recently was connected to the first earphone 2 7:31 in the morning.

The ear phones 2, 3 can be provided with a charging cradle, which is used to recharge the ear phone batteries 15, 17. The recharging cycle can be utilised to localise the left earphone. If the right earphone 2 can inform the smartphone app, that the MI link 5 has not been established since last charging cycle, then the left earphone 3 is likely left in the charging cradle.

The earphones 2, 3 can be embodied as earbuds that are fixed by being inserted into the outer ears. They can also be embodied with ear hooks to be hanged on the ear.

The audio rendering device is a smartphone 4 in the shown embodiment. However, it could also be a tablet computer, such as an iPad®, or a laptop computer or any other, typically portable, electronic device suited to connect wirelessly to the first earphone 2.

The term "module" used in here should be interpreted broadly. It is intended not to only cover a physical entity, but also a software entity or functional entity. Thus, the "localisation module" could be a physical module including a GPS sensor, or it could be a software part that collects localisation data from external sources.

### Reference signs:

- 1: system
- 2: right earphone
- 3: left earphone
- 4: smartphone
- 5: first wireless link
- 6: first earphone transceiver
- 7: second earphone receiver
- 8: third earphone transceiver
- 9: second wireless link
- 10: memory module
- 11: localisation module
- 12: first lost link signal
- 13: localisation data set
- 14: first earphone processor
- 15: first earphone battery
- 16: second earphone processor
- 17: second earphone battery
- 18: audio rendering processor
- 19: first earphone speaker
- 20: second earphone speaker
- 21: user
- 22: earphone memory module
- 23: earphone time-stamping module
- 24: earphone localisation module
- 25: audio rendering transceiver
- 26: microphone

## Claims

1. A wireless earphone system (1) comprising a first earphone (2) and a second earphone (3) and an audio rendering device (4), wherein the first earphone (2) comprises a first earphone transceiver of a first type, and (6) a second earphone transceiver (7) of a second type, the second earphone (3) comprises a third earphone transceiver (7) of the first type, wherein a first wireless link (5) can be established between the first earphone transceiver (6) and the third earphone transceiver (8), wherein a second wireless link (9) can be established between the second earphone transceiver (7) and an audio rendering transceiver (25) of the second type of the audio rendering device (4), wherein the first earphone (2) is adapted to send a first link status signal (12) via the second wireless link (9) to the audio rendering device (4), the first link status signal (12) indicating whether the first link (5) is established or broken, wherein the audio rendering device (4) has a rendering transceiver (25) of the second type, **CHARACTERIZED in that** the audio rendering device (4) comprises a localisation module (11) to determine the localisation of the audio rendering device (4) and a memory module (10) to store a localisation data set (13) representing the location of the audio rendering device (4), and wherein the localisation module (13) is adapted to store a localisation data set (13), when the audio rendering device (4) receives the first link status signal (12) from the first earphone (2).

2. A wireless earphone system (1) according to claim 1, wherein the first earphone (2) is adapted to send a link lost signal, if the first wireless link (5) is lost.

3. A wireless earphone system (1) system according to claim 1 or 2, wherein the first and third earphone transceivers (6, 8) are magnetic induction transceivers.

4. A wireless earphone system (1) according to any of the preceding claims, wherein the second earphone transceiver (8) is a Bluetooth® transceiver.

5. A wireless earphone system (1) according to any of the preceding claims, wherein the first earphone (2) comprises an earphone memory module (22).

6. A wireless earphone system (1) according to claim 5, wherein the first earphone (2) comprises an earphone time-stamping module (23).

7. A wireless earphone system (1) according to claim 5 or 6, wherein the first earphone (2) comprises an earphone localisation module (24).

8. A wireless earphone system (1) according to claim 7, wherein the earphone localisation module (24) is adapted to retrieve a localisation data set (13) from the audio rendering device (4).

9. A wireless earphone system (1) according to claim 1, wherein the audio rendering device (4) is adapted to store a localisation data set (13) comprising lost link status and a time stamp.

10. A wireless earphone system (1) according to claim 1, wherein the audio rendering device (4) is a smartphone.

## Patentansprüche

1. Drahtloses Kopfhörersystem (1), umfassend einen ersten Kopfhörer (2) und einen zweiten Kopfhörer (3) und eine Audiowiedergabeeinrichtung (4), wobei der erste Kopfhörer (2) einen ersten Kopfhörer-Transceiver eines ersten Typs und (6) einen zweiten Kopfhörer-Transceiver (7) eines zweiten Typs umfasst, der zweite Kopfhörer (3) einen dritten Kopfhörer-Transceiver (7) des ersten Typs umfasst, wobei eine erste drahtlose Verbindung (5) zwischen dem ersten Kopfhörer-Transceiver (6) und dem dritten Kopfhörer-Transceiver (8) aufgebaut werden kann, wobei eine zweite drahtlose Verbindung (9) zwischen dem zweiten Kopfhörer-Transceiver (7) und einem Audiowiedergabe-Transceiver (25) des zweiten Typs der Audiowiedergabeeinrichtung (4) aufgebaut werden kann, wobei der erste Kopfhörer (2) eingerichtet ist, um ein erstes Verbindungsstatussignal (12) über die zweite drahtlose Verbindung (9) an die Audiowiedergabeeinrichtung (4) zu senden, wobei das erste Verbindungsstatussignal (12) angibt, ob die erste Verbindung (5) aufgebaut oder abgebrochen ist, wobei die Audiowiedergabeeinrichtung (4) einen Wiedergabe-Transceiver (25) des zweiten Typs aufweist, **dadurch gekennzeichnet, dass** die Audiowiedergabeeinrichtung (4) ein Lokalisierungsmodul (11) zum Bestimmen der Lokalisierung der Audiowiedergabeeinrichtung (4) und ein Speichermodul (10) zum Speichern eines den Ort der Audiowiedergabeeinrichtung (4) darstellenden Lokalisierungsdatensatzes (13) umfasst, und wobei das Lokalisierungsmodul (13) eingerichtet ist, um einen Lokalisierungsdatensatz (13) zu speichern, wenn die Audiowiedergabeeinrichtung (4) den ersten Verbindungsstatussignal (12) vom ersten Kopfhörer (2) empfängt.

2. Drahtloses Kopfhörersystem (1) nach Anspruch 1, wobei der erste Kopfhörer (2) eingerichtet ist, um ein Verbindungsverlustsignal zu senden, falls die erste drahtlose Verbindung (5) verloren geht.

3. Drahtloses Kopfhörersystem (1) nach einem der Ansprüche 1 oder 2, wobei der erste und dritte Kopfhörer-Transceiver (6, 8) magnetische Induktionstransceiver sind.

4. Drahtloses Kopfhörersystem (1) nach einem der vorgehenden Ansprüche, wobei der zweite Kopfhörer-Transceiver (8) ein Bluetooth®-Transceiver ist.

5. Drahtloses Kopfhörersystem (1) nach einem der vorgehenden Ansprüche, wobei der erste Kopfhörer (2) ein Kopfhörer-Speichermodul (22) umfasst.

6. Drahtloses Kopfhörersystem (1) nach Anspruch 5, wobei der erste Kopfhörer (2) ein Kopfhörer-Zeitstempelmodul (23) umfasst.

7. Drahtloses Kopfhörersystem (1) nach Anspruch 5 oder 6, wobei der erste Kopfhörer (2) ein Kopfhörer-Lokalisierungsmodul (24) umfasst.

8. Drahtloses Kopfhörersystem (1) nach Anspruch 7, wobei das Kopfhörer-Lokalisierungsmodul (24) eingerichtet ist, um einen Lokalisierungsdatensatz (13) von der Audiowiedergabeeinrichtung (4) abzurufen.

9. Drahtloses Kopfhörersystem (1) nach Anspruch 1, wobei die Audiowiedergabeeinrichtung (4) eingerichtet ist, um einen Lokalisierungsdatensatz (13), der einen Verbindungsverluststatus und einen Zeitstempel umfasst, zu speichern.

10. Drahtloses Kopfhörersystem (1) nach Anspruch 1, wobei die Audiowiedergabeeinrichtung (4) ein Smartphone ist.

## Revendications

1. Système d'écouteur sans fil (1) comprenant un premier écouteur (2) et un deuxième écouteur (3) et un dispositif de rendu audio (4), dans lequel le premier écouteur (2) comprend un premier émetteur-récepteur d'écouteur d'un premier type, et (6) un deuxième émetteur-récepteur d'écouteur (7) d'un deuxième type, le deuxième écouteur (3) comprend un troisième émetteur-récepteur d'écouteur (7) du premier type, dans lequel une première liaison sans fil (5) peut être établie entre le premier émetteur-récepteur d'écouteur (6) et le troisième émetteur-récepteur d'écouteur (8), dans lequel une deuxième liaison sans fil (9) peut être établie entre le deuxième émetteur-récepteur d'écouteur (7) et un émetteur-récepteur de rendu audio (25) du deuxième type du dispositif de rendu audio (4), dans lequel le premier écouteur (2) est adapté pour envoyer un premier signal d'état de liaison (12) via la deuxième liaison sans fil (9) au dispositif de rendu audio (4), le premier signal d'état de liaison (12) indiquant si la première liaison (5) est établie ou rompue, dans lequel le dispositif de rendu audio (4) présente un émetteur-récepteur de rendu (25) du deuxième type, **caractérisé en ce que** le dispositif de rendu audio (4) comprend un module de localisation (11) pour déterminer la localisation du dispositif de rendu audio (4) et un module de mémoire (10) pour stocker un ensemble de données de localisation (13) représentant l'emplacement du dispositif de rendu audio (4), et dans lequel le module de localisation (13) est adapté pour stocker un ensemble de données de localisation (13), lorsque le dispositif de rendu audio (4) reçoit le premier signal d'état de liaison (12) du premier écouteur (2).

2. Système d'écouteur sans fil (1) selon la revendication 1, dans lequel le premier dispositif d'écouteur (2) est adapté pour envoyer un signal de perte de liaison, si la première liaison sans fil (5) est perdue.

3. Système d'écouteur sans fil (1) selon la revendication 1 ou 2, dans lequel les premier et troisième émetteurs-récepteurs d'écouteurs (6, 8) sont des émetteurs-récepteurs à induction magnétique.

4. Système d'écouteur sans fil (1) selon l'une quelconque des revendications précédentes, dans lequel le deuxième émetteur-récepteur d'écouteur (8) est un émetteur-récepteur Bluetooth®.

5. Système d'écouteur sans fil (1) selon l'une quelconque des revendications précédentes, dans lequel le premier écouteur (2) comprend un module de mémoire d'écouteur (22).

6. Système d'écouteur sans fil (1) selon la revendication 5, dans lequel le premier écouteur (2) comprend un module d'horodatage d'écouteur (23).

7. Système d'écouteur sans fil (1) selon la revendication 5 ou 6, dans lequel le premier écouteur (2) comprend un module de localisation d'écouteur (24).

8. Système d'écouteur sans fil (1) selon la revendication 7, dans lequel le module de localisation d'écouteur (24) est adapté pour récupérer un ensemble de données de localisation (13) à partir du dispositif de rendu audio (4).

9. Système d'écouteur sans fil (1) selon la revendication 1, dans lequel le dispositif de rendu audio (4) est adapté pour stocker un ensemble de données de localisation (13) comprenant l'état de liaison perdue et un horodatage.

10. Système d'écouteur sans fil (1) selon la revendication 1, dans lequel le dispositif de rendu audio (4) est un téléphone intelligent.
